# EUROPEAN PATENT APPLICATION

(11) **EP 4 293 688 A1**
(43) Date of publication of application: **20.12.2023**
(21) Application number: 22305876.9
(22) Date of filing: 15.06.2022
(51) Int. Cl.: H01B 3/30, C08L 71/10, H01B 3/42, H02K 3/30

(54) **USE OF A COMPOSITION HAVING LOW PERMITTIVITY OVER A HIGH TEMPERATURE RANGE**

(71) Applicant: ARKEMA FRANCE, 92700 Colombes (FR)
(72) Inventor: BARSOTTI, Robert, KING OF PRUSSIA, 19406-0936 (US); PAUL, Clément, 27470 SERQUIGNY (FR); BRULE, Benoît, 27470 SERQUIGNY (FR)
(74) Representative: Arkema Patent

(57) **Abstract**

The present application deals with the use of an insulating composition as an electrical insulation material at a temperature of more than 160°C, wherein the insulating composition comprises at least one polyaryletherketone and at least one polyetherimide, the weight ratio of the polyaryletherketone to the polyetherimide being of 95:5 to 55:45, and a process wherein such an insulating composition is used, the process including letting an electrical current going through said electrical wire at a temperature of 160°C or more

## Description

### TECHNICAL FIELD

The present application relates to a specific use of a composition comprising a mixture of polyaryletherketone, notably for example polyetherketoneketone, and a polyetherimide, as an electrical insulation material.

The application also relates to a process wherein an electrical current is applied at high temperature to an insulated conductor, for example an electrical wire, having at least one layer of electrical insulation made of a composition comprising a mixture of polyaryletherketone and a polyetherimide.

### TECHNICAL BACKGROUND

A magnet wire, also referred to as a winding wire or a magnetic winding wire, is utilized in a wide variety of electric machines and devices, such as inverter drive motors, motor starter generators, transformers, etc. Typically, a magnet wire is constructed by applying electrical insulation to a metallic conductor, such as a copper, aluminum, or an alloy conductor. The insulation provides for electrical integrity and prevents short circuits in the magnet wire.

Compositions comprising a polyaryletherketone and a polyetherimide for use as electrical insulation are known from the art.

For example, document WO2020095268 discloses thermoplastic compositions consisting of polyetheretherketone (PEEK), a polyetherimide having repeating units derived from bisphenol A dianhydride and para-phenylene diamine (PEI-1) or having repeating units derived from bisphenol A dianhydride and 4,4'-diaminodiphenylsulfone (PEI-2), and a reactive additive (see Table 1and Table 4), useful in an insulating layer disposed over a conductor wire to form an electrical wire. The document is however mute about the characterization of the insulation properties of the composition and about its temperature of use.

Document WO2020095268 discloses polyetherimide (PEI)-based compositions containing in addition to the PEI, a polyetheretherketone (PEEK). The PEI is always the predominant polymer in the exemplified compositions (see Table 1). Tests of partial discharge inception voltage (PDIV) were carried out at elevated temperatures, such as 150°C, or even 190°C but not higher. No information is provided on the electrical permittivity.

The relative permittivity, also called sometimes dielectric constant, is the permittivity of a material expressed as a ratio with the electric permittivity of vacuum. By definition, the permittivity of vacuum is set to 1. The relative permittivity is linked to the polarizability of atoms/polymeric chains in a material. The lower the relative permittivity is at a given temperature, the more efficient the insulation is. In addition, the permittivity of polymeric compositions is known to substantially increase with temperature increase.

There is presently an existing need to provide polymeric insulating compositions, notably used for magnet wires, suitable to withstand physically elevated temperatures with good insulating efficiency.

### SUMMARY

The invention concerns the use of an insulating composition as an electrical insulation material at a temperature of more than 160°C, wherein the insulating composition comprises at least one polyaryletherketone and at least one polyetherimide, the weight ratio of the polyaryletherketone to the polyetherimide being of 95:5 to 55:45.

According to some embodiments, the use is made at a temperature of 160°C to 170°C, or of 170°C to 180°C, or of 180°C to 200°C, or of 200°C to 220°C, or of 220°C to 250°, or of 250°C or over.

According to some embodiments, the weight ratio of the polyaryletherketone to the polyetherimide in the insulating composition is of 85:15 to 60:40.

According to some embodiments, the polyaryletherketone and the polyetherimide represent at least 75%, or at least 80%, or at least 85%, or at least 90%, or at least 95% by weight of the total weight of the insulating composition.

According to some embodiments, the insulating composition comprises at least one additional compound chosen among: other thermoplastic(s) than the polyaryletherketone and the polyetherimide(s), filler(s), additive(s), or their mixtures.

According to some embodiments, the insulating composition consists of the polyaryletherketone and the polyetherimide.

According to some embodiments, the polyaryletherketone is a polyetherketoneketone, which essentially consists of, or consists of:
- a repeating unit of chemical formula: 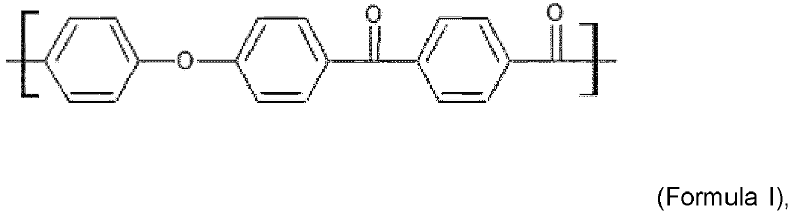 designated as terephthalic repeating unit (T) ; and optionally,
- a repeating unit of repeating units of chemical formula: 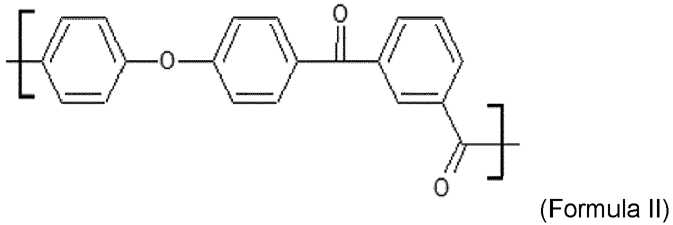 designated as isophthalic repeating unit (I).

In these embodiments, the molar ratio of the terephthalic repeating units to the isophthalic repeating units is preferably of 50:50 to 100:0, more preferably of 65:35 to 95:5, even more preferably of 68:32 to 90:10, and most preferably of 71:29 to 85:15.

According to some embodiments, the polyetherimide comprises, essentially consists of, or consists of, repeating units of formula: 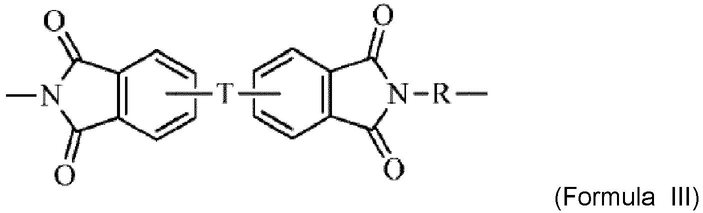 ,
wherein R is a substituted or unsubstituted C₆₋₂₀ aromatic hydrocarbon group, a substituted or unsubstituted straight or branched chain C₄₋₂₀ alkylene group, a substituted or unsubstituted C₃₋₈, cycloalkylene group, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic group optionally substituted with 1 to 6 C₁₋₈ alkyl groups, 1-8 halogen atoms, or a combination comprising at least one of the foregoing.

In these embodiments, T preferably represents the group of chemical formula: 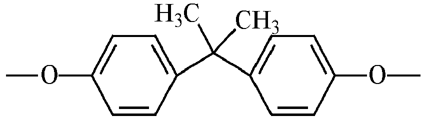 , and/or
R preferably represents the group of chemical formula:

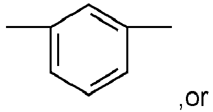

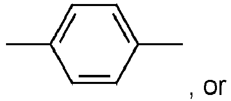

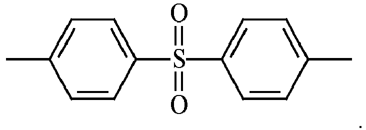

According to some embodiments, the insulating composition has a melt viscosity index from 1 to 100 cm³/10 min, preferably from 2 to 90 cm³/10 min, and most preferably from 5 to 85 cm³/10 min, at 380°C and under a charge of 5 kg.

According to some embodiments, the use is made in an electric field having a frequency of 10 Hz or less.

According to some embodiments, the use is made in an electric field having a frequency of 10 Hz to 100 Hz.

According to some embodiments, the use is made in an electric field having a frequency of 100 Hz or more.

According to some embodiments, the lowest temperature at which the insulation composition's relative permittivity exceeds 4 is at least 10°C higher, preferably at least 15°C higher, more preferably at least 20°C higher, even more preferably at least 25°C higher, and most preferably at least 30°C higher than the corresponding temperature of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition.

According to some embodiments, the relative permittivity at a specified temperature of use of 190°C of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition, is at least 5,0%, preferably at least 9,0%, and most preferably at least 12,0% higher than the relative permittivity of the insulating composition.

According to some embodiments, the relative permittivity at a specified temperature of use of 250°C of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition, is at least 25,0%, preferably at least 50,0%, and most preferably at least 75,0% higher than the relative permittivity of the insulating composition, as measured in an electric field of 10 Hz or less.

The invention also concerns a process comprising:
- providing an insulated conductor having at least one layer of electrical insulation, said electrical insulation comprising at least one polyaryletherketone and at least one polyetherimide, wherein the weight ratio of the polyaryletherketone to the polyetherimide is of 95:5 to 55:45 ;
- letting an electrical current going through said insulated conductor at a temperature of more than 160°C.

### FIGURES

[Fig. 1] represents the real part of the relative permittivity (ε') in function of temperature between 160°C and 300°C at 1Hz, for the three formulations of the examples: diamond(◇): neat PEKK (formulation #3) ; square(□): PEKK:PEI 80:20 wt (formulation #2) ; triangle(Δ): PEKK:PEI 60:40 wt.
[Fig. 2] represents the same graph as in Figure 1, with a zoom on the range of temperatures 160°C-240°C.
[Fig. 3] represents the real part of the relative permittivity (ε') in function of temperature between 160°C and 300°C at 40 Hz, for the three formulations of the examples: diamond(◇): neat PEKK (formulation #3) ; square(□): PEKK:PEI 80:20 wt (formulation #2) ; triangle(Δ): PEKK:PEI 60:40 wt.
[Fig. 4] represents the real part of the relative permittivity (ε') in function of temperature between 160°C and 300°C at 63 Hz, for the three formulations of the examples: diamond(◇): neat PEKK (formulation #3) ; square(□): PEKK:PEI 80:20 wt (formulation #2) ; triangle(Δ): PEKK:PEI 60:40 wt.
[Fig. 5] represents the real part of the relative permittivity (ε') in function of temperature between 160°C and 300°C at 1 kHz, for the three formulations of the examples: diamond(◇): neat PEKK (formulation #3) ; square(□): PEKK:PEI 80:20 wt (formulation #2) ; triangle(Δ): PEKK:PEI 60:40 wt.

### DESCRIPTION OF EMBODIMENTS

The invention will now be described in more detail without limitation in the following description.

### Polvarvletherketone

A polyaryletherketone (PAEK) includes repeating units having the following formulae:

(-Ar-X-) and (-Ar₁-Y-),

in which:
- Ar and Ar₁ each denote a divalent aromatic radical;
- Ar and Ar₁ may preferably be chosen from 1,3-phenylene, 1,4-phenylene, 1,1'-biphenylene divalent in positions 3,3', 1,1'-biphenyl divalent in positions 3,4', 1,4-naphthylene, 1,5-naphthylene and 2,6-naphthylene;
- X denotes an electron-withdrawing group; it may preferably be chosen from the carbonyl group and the sulfonyl group;
- Y denotes a group chosen from an oxygen atom, a sulfur atom or an alkylene group, such as -(CH₂)- and isopropylidene.

In these units X and Y, at least 50%, preferably at least 70% and more particularly at least 80% of the groups X are a carbonyl group, and at least 50%, preferably at least 70% and more particularly at least 80% of the groups Y represent an oxygen atom.

According to a preferred embodiment, 100% of the groups X may represent a carbonyl group and 100% of the groups Y may represent an oxygen atom. Advantageously, the PAEK(s) may be chosen from:
- a polyetherketoneketone, also known as PEKK; a PEKK comprises one or more repeat units of formula: -Ph-O-Ph-C(O)-Ph-C(O)-;
- a polyetheretherketone, also known as PEEK; a PEEK comprises one or more repeat units of formula: -Ph-O-Ph-O-Ph-C(O)-;
- a polyetherketone, also known as PEK; a PEK comprises one or more repeat units of formula: -Ph-O-Ph-C(O)-;
- a polyetheretherketoneketone, also known as PEEKK; a PEEKK comprises one or more repeat units of formula: -Ph-O-Ph-O-Ph-C(O)- Ph-C(O)-;
- a polyetheretheretherketone, also known as PEEEK; a PEEEK comprises one or more repeat units of formula: -Ph-O-Ph-O-Ph-O- Ph-C(O)-;
- a polyetherdiphenyletherketone, also known as PEDEK; a PEDEK comprises one or more repeat units of formula: -Ph-O-Ph-Ph-O-Ph-C(O)-;
- and mixtures thereof; and
- copolymers comprising at least two of the abovementioned repeat units,
in which: Ph represents a phenylene group and -C(O)- represents a carbonyl group, each of the phenylenes possibly being, independently, of the ortho (1-2), meta (1-3) or para-(1-4) type, preferentially being of meta or para type.

In addition, defects, end groups and/or monomers may be incorporated in very small amount into the polymers as described in the above list, without, however, having an incidence on their performance.

In the embodiments in which the polymer is a copolymer, it may advantageously be a copolymer of statistical type.

In particular embodiments, the PAEK may be a PEKK, preferably essentially consisting of, or consisting of, a terephthalic repeating unit and an isophthalic repeating unit, the terephthalic repeating unit ("T") having the formula: 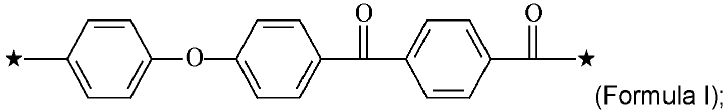 the isophthalic repeating unit ("I") having the formula:

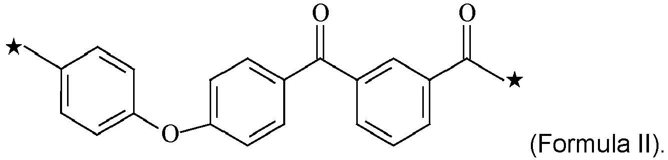

For a polymer of a given family, the term "essentially consisting of repeating unit(s)" means that the repeating unit(s) represent(s) a molar proportion of from 95% to 99.9% in the polymer. In addition, the term "consisting of repeating unit(s)" means that the repeating unit(s) represent(s) a molar proportion of at least 99.9%, ideally of 100%, in the polymer.

The choice of the molar proportion of T units, relative to the sum of the T and I units, is one of the factors which makes it possible to adjust the rate of crystallization of the polyetherketoneketones.

A given molar proportion of T units, relative to the sum of the T and I units, may be obtained by adjusting the respective concentrations of the reagents during the polymerization, in a manner known per se.

The molar proportion of T units relative to the sum of the T and I units of PEKK may notably range from: 0 to 5%; or from 5% to 10%; or from 10% to 15%; or from 15% to 20%; or from 20% to 25%; or from 25% to 30%; or from 30% to 35%; or from 35% to 40%; or from 40% to 45%; or from 45% to 48%; or from 48% to 51%; or from 51% to 54%; or from 54% to 58%; or from 58% to 60%; or from 60% to 62%, or from 62% to 64%; or from 64% to 68%; or from 68% to 72%; or from 72% to 75%; or from 75% to 80%; or from 80% to 85%; or from 85% to 90%; or from 90% to 95%; or from 95% to 100%.

In advantageous embodiments, the polyetherketoneketone consists essentially of, or consists of "T" and "I" units, with a molar proportion of T units relative to the sum of the T and I units ranging from: 50% to 100%.

Preferably, the molar proportion of T units relative to the sum of the T and I units is of 65% to 95%, more preferably of 68% to 90%, and most preferably of 71% to 85%.

In particular embodiments, the PAEK may be a polymer consisting essentially of, or consisting of a repeat unit of formula:

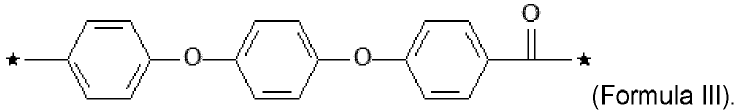

In particular embodiments, the PAEK may be a polymer consisting essentially of, or consisting of:
a repeat unit of formula (III) and a repeat unit of formula:

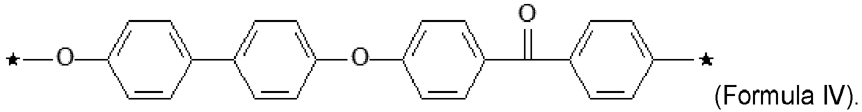

The molar proportion of units (III) relative to the sum of the units (III) and (IV) may range from 0% to 99%. The molar proportion of units (III) relative to the sum of the units (III) and (IV) may preferentially be greater than or equal to 55% and/or less than or equal to 95%, and even more preferentially greater than or equal to 60% and/or less than or equal 85%.

In particular embodiments, the PAEK may be a polymer consisting essentially of, or consisting of:
a repeating unit of formula (III)
and a repeating unit of formula:

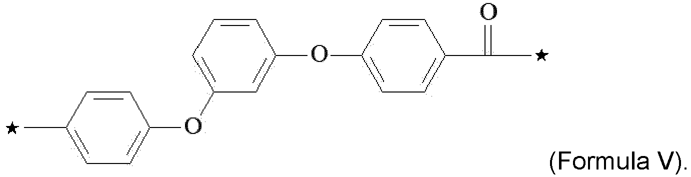

The molar proportion of units (III) relative to the sum of the units (III) and (V) may range from 0% to 99%. The molar proportion of units (III) relative to the sum of the units (III) and (V) may preferentially be greater than or equal to 5% and/or less than or equal to 97%, more preferentially greater than or equal to 40% and/or less than or equal to 96% and even more preferentially greater than or equal to 70% and/or less than or equal 95%.

### Polyetherimide

A polyetherimide comprises, essentially consists of, or consists of repeating units of formula: 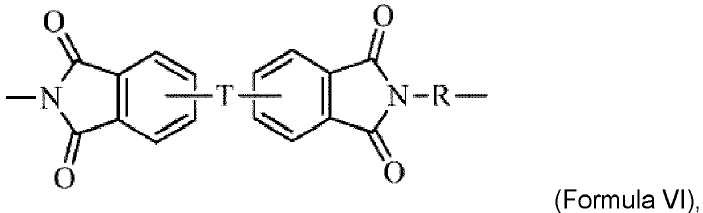 wherein R is a substituted or unsubstituted C₆₋₂₀ aromatic hydrocarbon group, a substituted or unsubstituted straight or branched chain C₄₋₂₀ alkylene group, a substituted or unsubstituted C₃₋₈, cycloalkylene group, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic group optionally substituted with 1 to 6 C₁₋₈ alkyl groups, 1-8 halogen atoms, or a combination comprising at least one of the foregoing.

The polyetherimide may comprise more than 1, for example 2 to 1000, preferably 5 to 500, and most preferably 10 to 100 of the aforementioned repeat unit.

The polyetherimide may comprise up to 50% by weight, not included, compared to the weight of the polyetherimide, of a monomer of different formula than formula (VI). In some embodiments, the polyetherimide comprises up to 40%, or up to 30%, or up to 20%, or up to 10%, or up to 5%, or up to 1% by weight of a monomer of different formula than formula (VI).

In some embodiments, the polyetherimide consists of one or more repeating units of formula (VI).

In some embodiments, the polyetherimide consists of only one type of repeating units of formula (VI).

In some embodiments, R is divalent group of one or more of the following formulae: 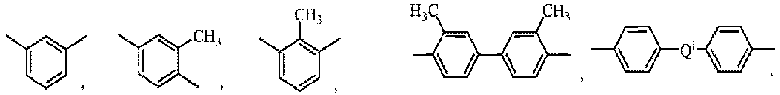 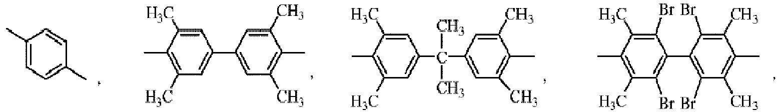 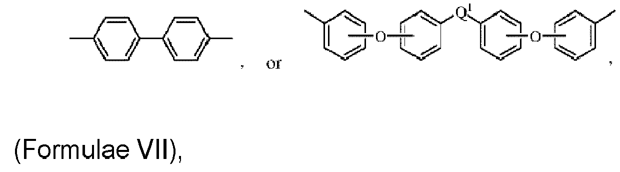 wherein Q¹ is -O-, -S-, -C(O)-, -SO₂-, -SO-, -P(R^{a})(=0)- wherein R^{a} is a C₁₋₈ alkyl or C₆₋₁₂ aryl, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4.

In some embodiments, R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing.

In some embodiments, at least 10 mole percent or at least 50 mole percent of the R groups contain sulfone groups, and in other embodiments no R groups contain sulfone groups.

In some embodiments, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula: 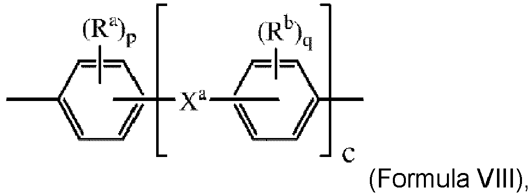 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or nonaromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group.

A specific example of a group Z is a divalent group of formula: 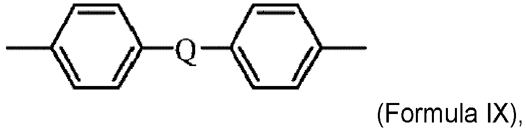 wherein Q is -O-, -S-, -C(O)-, -SO₂-, -SO-, -P(R^{a})(=0)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group).

In a specific embodiment Z is a derived from bisphenol A, such that Q in formula VI is 2,2-isopropylidene.

In some embodiments in formula (VI), R is m-phenylene, p-phenylene, or a combination comprising at least one of the foregoing, and T is -O-Z-O- wherein Z is a divalent group of formula (IX).

Alternatively, R is m-phenylene, p-phenylene, or a combination comprising at least one of the foregoing, and T is -O-Z-O wherein Z is a divalent group of formula IX and Q is 2,2-isopropylidene. Such materials are available under the trade name ULTEM^{®} from SABIC.

Alternatively, the polyetherimide can be a copolymer comprising additional structural polyetherimide units of formula (VI) wherein at least 50 mole percent (mole percent) of the R groups are bis(4,4'-phenylene)sulfone, bis(3,4'-phenylene)sulfone, bis(3,3'- phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety, an example of which is commercially available under the trade name EXTEM^{®} from SABIC.

### Optional components in the insulating composition

The insulating composition may comprise other components than the polyaryletherketone and the polyetherimide. It may notably comprise additional thermoplastic(s), filler(s) and/or additive(s).

Additional thermoplastic(s) may at least be suitable to thermally withstand the melt-mixing of the polyaryletherketone and polyetherimide.

Among the fillers, we can cite non-fibrous fillers, such as boron nitride, titanium dioxide, talc, or calcium carbonate.

Among the fillers, we can also cite reinforcing fibers, crushed or not, such as glass fibers. Generally speaking, reinforcing fibers have an aspect ratio length to diameter of at least 25:1.

Among the additives, we can mention compatibilizing agents, stabilizing agents, foaming agents, heat stabilizer such as for example phosphate salts, optical brighteners, dyes, pigments, energy-absorbing additives (including UV absorbers), viscosity additives, additives to adjust the rate of crystallization of the composition.

### Insulating composition

The weight ratio of the polyaryletherketone to the polyetherimide in the insulating composition is of 95:5 to 55:45.

This composition shows notably good chemical resistance and/or retains good mechanical properties at high temperature.

Preferably, the weight ratio of the polyaryletherketone to the polyetherimide in the insulating composition may be of 85:15 to 60:40.

In some embodiments, the weight ratio of the polyaryletherketone to the polyetherimide in the insulating composition may be of 85:15 to 75:25, or of 75:25 to 65:35, or of 65:35 to 60:40.

Preferably, the polyaryletherketone and the polyetherimide represent altogether at least 75%, or at least 80%, or at least 85%, or at least 90%, or at least 95% by weight of the total weight of the insulating composition.

In some embodiments, the composition consists of one or more polyaryletherketones, one or more polyetherimides, and one or more optional components. The polyaryletherketone and the polyetherimide may represent altogether at least 75%, or at least 80%, or at least 85%, or at least 90%, or at least 95% by weight of the total weight of the insulating composition, the optional components being in a proportion so that the sum of weight per cents of the different species in the insulating composition reaches 100%.

In some embodiments, the composition consists of one or more polyaryletherketones, one or more polyetherimides, and one or more: fillers and/or additives.

In some embodiments, the composition consists of one or more polyaryletherketones, one or more polyetherimides, and one or more additives.

In some embodiments, the composition consists only of the polyaryletherketone(s) and the polyetherimide(s).

The composition below are particularly advantageous.

A composition comprising 75% or more by weight, and in specific embodiments 100% by weight, of a polyaryletherketone being a polyetherketone essentially consisting of, or consisting of terephthalic repeating units and isophthalic repeating units, the molar ratio of the terephthalic repeating units to the isophthalic repeating units is of 50:50 to 100:0, preferably of 65:35 to 95:15, more preferably of 68:32 to 90:10, and most preferably of 71:29 to 85:15, and a polyetherimide essentially consisting of, or consisting of repeating units of formula (VI), wherein: T represents the group of chemical formula: 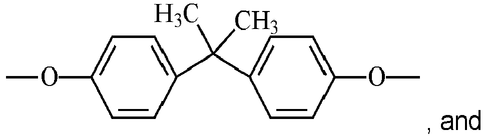 R represents the group of chemical formula:

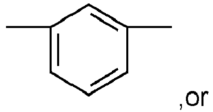

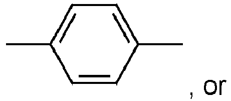

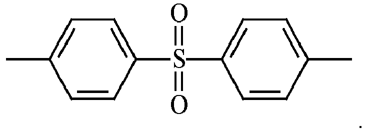

In some advantageous embodiments, the insulating composition has a melt viscosity index from 1 to 100 cm³/10 min, preferably from 2 to 90 cm³/10 min, and most preferably from 5 to 85 cm³/10 min, at 380°C and under a charge of 5 kg.

Preferably, the polyaryletherketone(s) and the polyetherimide(s) of the composition have independently a melt viscosity index from 1 to 100 cm³/10 min, preferably from 2 to 90 cm³/10 min, and most preferably from 5 to 85 cm³/10 min, at 380°C and under a charge of 5 kg.

The insulating composition may have a crystallinity of 5,0%, preferably of 8,0% and most preferably of 10,0% by weight of total amount of polyaryletherketone in the insulating composition.

The crystallinity may be measured by Wide-Angle X-ray Scattering (WAXS) analysis. For example, it may be carried on a Nano-inXider^{®} type device with the following conditions:
- Wavelength: main line Kα1 of copper (1.54 Angstrom).
- Generator power: 50 kV - 0.6 mA.
- Observation mode: transmission.
- Counting time: 10 minutes.

These crystallinities may be obtained directly online when the composition is extruded, or necessitate an annealing step that can be carried out online with a heating equipment, for example a tubular oven, or offline.

This gives a spectrum of the scattered intensity as a function of the diffraction angle. This spectrum makes it possible to identify the presence of crystals, when peaks are visible on the spectrum in addition to the amorphous halo.

In the spectrum, the area of the crystalline peaks (denoted AC) and the area of the amorphous halo (denoted AH) can be measured. The mass proportion of crystalline PEKK in the polymeric mixture is then estimated by the ratio (AC)/(AC+AH).

### Preparation of the composition

The process for the preparation of the insulating composition may be carried out in a melt-mixing apparatus. Any melt-mixing apparatus known to the one skilled in the art for preparing polymer compositions by melt mixing can be used.

Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt, by side feeding for instance.

In the process for the preparation of the insulating composition, the components are fed to the melt-mixing apparatus and melt-mixed in that apparatus. In particular, the melt-mixing process may be carried out by heating the polyaryletherketone(s) and the polyetherimide(s) above a sufficient temperature so that both of them are processable.

The different components of the composition may be fed simultaneously as a powder mixture or pellets mixture or mixture of powder and pellets, also known as dryblend. They may also be fed separately.

The order of combining the components during melt-mixing is not particularly limited.

In one embodiment, the component can be mixed in a single batch, such that the desired amounts of each component are added together and subsequently mixed.

In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method for manufacturing the insulating compositions also comprises a step of extrusion, for example with a die.

The method may comprise if needed several successive steps of melt-mixing or extrusion under different conditions.

### Electrical wires and articles made thereof

The insulating composition may be particularly useful in electrical wire applications. An electrical wire comprises a conductor wire and one or more insulating layers disposed over the conductor wire. One or more of the insulating layers is made of the insulating composition.

The insulating composition may be applied to the conductor wire by a suitable method such as extrusion coating to form a coated wire.

In some embodiments, the insulating composition is applied to the conductor wire to form an insulation layer over and in physical contact with the conductor wire.

In other embodiments, the electrical wire may comprise one or more intervening layers positioned between the conductor wire the one or more insulating layers made of the insulating composition. One example of such intervening layer is an adhesion promoting layer disposed between the conductor wire and the insulating layer made of the insulating composition.

The conductor wire may comprise a single strand or a plurality of strands. In some cases, a plurality of strands may be bundled, twisted, braided, or a combination of the foregoing to form the conductor wire. Suitable materials for the conductor wires include, but are not limited to, copper, aluminum, lead, gold, silver, iron, nickel, chromium, and alloys comprising at least one of the foregoing metals. The conductor wire may notably be copper. The conductor wire may also be coated with other metals such as tin, gold or silver.

In some embodiments the one or more insulating layers made of the insulating composition may have a thickness of 50 µm to 200 µm. As described more in detail in the section dedicated to the relative permittivity of the insulation composition, one advantage of the insulating composition compared to a composition made only of polyaryletherketone in place of the mixture of polyaryletherketone and polyetherimide is that at a given elevated temperature it has a lower relative permittivity. As a consequence, comparable insulating properties at a given temperature may be obtained from the insulating composition with a lower thickness than the one which would be necessary with a comparative composition wherein polyaryletherketone replaces the mixture of polyaryletherketone and polyetherimide.

Multiple coated wires may be combined to form a cable. The cable may comprise additional protective elements, structural elements, or a combination thereof.

The electrical wire may be used to form a magnet wire utilized in a wide variety of electric machines and devices, such as inverter drive motors, motor starter generators, transformers, etc

Articles comprising the electrical wire may be particularly useful for an electrical device component, a railway vehicle component, an automobile component, a marine vehicle component, a construction component, a building component, or an aircraft component.

The insulating composition is not only useful for manufacturing electrical wires as described above but also for manufacturing other insulated conductors. Other insulated conductors include: busbars, electrical connectors, and rigid or flexible circuit boards.

Any suitable method known by the skilled person may be used to apply the insulating composition to form any kind of insulated conductor.

### Relative permittivity of the insulating composition at elevated temperatures

The invention concerns the use of the insulating composition as an electrical insulation material at elevated temperatures. Indeed, the insulating composition shows remarkable low relative permittivity at higher temperatures than comparative compositions made of only the polyaryletherketone in place of the mixture of polyaryletherketone and polyetherimide.

The measurement of the relative permittivity may be carried out based on the norm IEC 62631-2-1:2018. Specifically, in the present invention, and as described in the examples, the measurement of the relative permittivity is carried out on extruded composition machined down to a thickness of 0,5 mm, at a given temperature and at a given frequency.

The temperature at which the insulating composition is suitable to be used may be a service temperature (also known as continuous use temperature) and/or a hot spot temperature (also known as peak operating temperature).

This temperature is higher than 160°C. It may be of 160°C to 180°C, or of 180°C to 200°C, or of 200°C to 220°C, or of 220°C to 250°, or of 250°C or over.

It is thereafter assumed that the insulating composition forms at least one insulating layer (insulation material) of an electrical wire or of an article made thereof in an illustrative purpose, as this application appears to be particularly useful. However, the disclosure does not limit itself to this specific embodiment and may be transposed to other applications of the insulating composition wherein the insulating composition is submitted to an electrical field.

An electric current may be let go through the electrical wire at the temperature of use of the insulating composition.

The electric current may be an Alternating Current (AC) or a Direct Current (DC).

In some embodiments, the insulation composition is used in an electric field having a frequency of 10 Hz or less.

In some embodiments, the insulation composition is used in an electric field having a frequency of 10 Hz to 100 Hz.

In some embodiments, the insulation composition is used in an electric field having a frequency of 100 Hz or more.

In some embodiments, the lowest temperature at which the insulation composition's relative permittivity exceeds 3,5 is at least 5°C higher, preferably at least 10°C higher, more preferably at least 15°C higher, and most preferably at least 20°C higher than the corresponding temperature of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition, as measured in an electric field of 10 Hz or less, notably at 1 Hz, or in an electric field of 10 Hz to 100 Hz, notably 40Hz or 63 Hz, or in an electric field of 100 Hz or more, notably 1000 Hz.

In some embodiments, the temperature at which the insulation composition's relative permittivity exceeds 3,5, as measured in an electric field of 10 Hz or less, notably at 1 Hz, may be of 170°C or more, preferably of 175°C or more, more preferably of 180°C or more, even more preferably of 185°C or more and most preferably of 190°C or more.

In some embodiments, the temperature at which the insulation composition's relative permittivity exceeds 3,5, as measured in an electric field of 10 Hz to 100Hz, notably 40Hz or 63 Hz, may be of 180°C or more, preferably of 185°C or more, more preferably of 190°C or more, even more preferably of 195°C or more and most preferably of 200°C or more.

In some embodiments, the temperature at which the insulation composition's relative permittivity exceeds 3,5, as measured in an electric field of 100Hz or more, notably 1000 Hz, may be of 185°C or more, preferably of 190°C or more, more preferably of 195°C or more, even more preferably of 200°C or more, and most preferably of 205°C or more.

In some embodiments, the lowest temperature at which the insulation composition's relative permittivity exceeds 4 is at least 10°C higher, preferably at least 15°C higher, more preferably at least 20°C higher, even more preferably at least 25°C higher, and most preferably at least 30°C higher than the corresponding temperature of a comparative composition as defined above, as measured in an electric field of 10 Hz or less, notably at 1 Hz, or in an electric field of 10 Hz to 100 Hz, notably 40Hz or 63 Hz, or in an electric field of 100 Hz or more, notably 1000 Hz.

In some embodiments, the temperature at which the insulation composition's relative permittivity exceeds 4, as measured in an electric field of 10 Hz or less, notably at 1 Hz, may be of 185°C or more, preferably of 190°C or more, more preferably of 195°C or more, even more preferably of 200°C or more and most preferably of 205°C or more.

In some embodiments, the temperature at which the insulation composition's relative permittivity exceeds 4, as measured in an electric field of 10 Hz to 100Hz, notably 40Hz or 63 Hz, may be of 205°C or more, preferably of 210°C or more, more preferably of 215°C or more, even more preferably of 220°C or more, and most preferably of 225°C or more.

In some embodiments, the temperature at which the insulation composition's relative permittivity exceeds 4, as measured in an electric field of 100Hz or more, notably 1000 Hz, may be of 205°C or more, preferably of 260°C or more, more preferably of 265°C or more, even more preferably of 270°C or more, and most preferably of 275°C or more.

In some embodiments, the relative permittivity at a specified temperature of use of 190°C of a comparative composition as defined above is at least 5,0% higher, preferably at least 9,0% higher, and most preferably at least 12,0% higher than the relative permittivity of the insulating composition, as measured in an electric field of 10 Hz or less, notably at 1 Hz, or in an electric field of 10 Hz to 100 Hz, notably 40Hz or 63 Hz, or in an electric field of 100 Hz or more, notably 1000 Hz.

In some embodiments, the relative permittivity at a specified temperature of use of 250°C of a comparative composition as defined above is at least is at least 25% higher, preferably at least 50% higher, and most preferably at least 75% higher than the relative permittivity of the insulating composition, as measured in an electric field of 10 Hz or less, notably at 1 Hz.

### Examples

### Sample preparation

The following base materials were used:
- PEKK Kepstan^{®} Pellets of the series KESPSTAN^{®}8000 commercialized by Arkema ; MVI = 5 cc/10min under 5kg at 380°C ;
- PEI Ultem^{®} 1000 Pellets commercialized by Sabic ; MVI = 13 cc/10min under 5kg at 360°C.

Compounding has been realized on a COPERION ZSK18 with a twin screw extruder having a temperature profile with ascending temperature till the last zone at 360°C and die at 370°C.

After being dried at 150°C overnight, the base materials were introduced in different proportions (compositions 1-2) with 2 separate feeders in first zone, with a global throughput of 4 kg/h and a screw speed set at 250 rpm.

Formulations 1-2 were produced with the following proportions of base material:

| FORMULATION | PEKK (% weight) | PEI (% weight) |
|---|---|---|
| #1 | 80 | 20 |
| #2 | 60 | 40 |

After drying at 150°C overnight, pellets of neat PEKK (made of 100% weight of PEKK ; composition #3) and pellets of compounded formulations #1- #2 have been used to prepare sheets: a Collin, 30mm diameter mono-screw extruder, with a L/D=25, having a temperature profile with ascending temperature till the last zone at 380°C, was used. The screw speed was set to 82 rpm and a global line speed of 0,77mm/min. The extruder was connected to a flat die having adjustable thickness and a width of 150mm. After going out from the die, the melted material was conveyed on a 3 rolls calendering equipement. The spacing between rolls was adapted just above the desired thickness to produce 2mm thick sheets. Sheets were then cut with "guillotine" to the desirable length at the end of the line. After processing, pieces of 2mm sheets for each formulations have been annealed in ventilated oven at 240°C for 24h.

### Dielectric Testing

To perform dielectric testing experiments, 43mm diameter & 0,5mm thick discs have been machined out of the crystalline sheets of composition #1-#3. Discs have been dried under vacuum at 120°C over 48h and remain in desiccant till tested.

Discs made of formulations #1-#3 are referred thereafter as discs #1-#3.

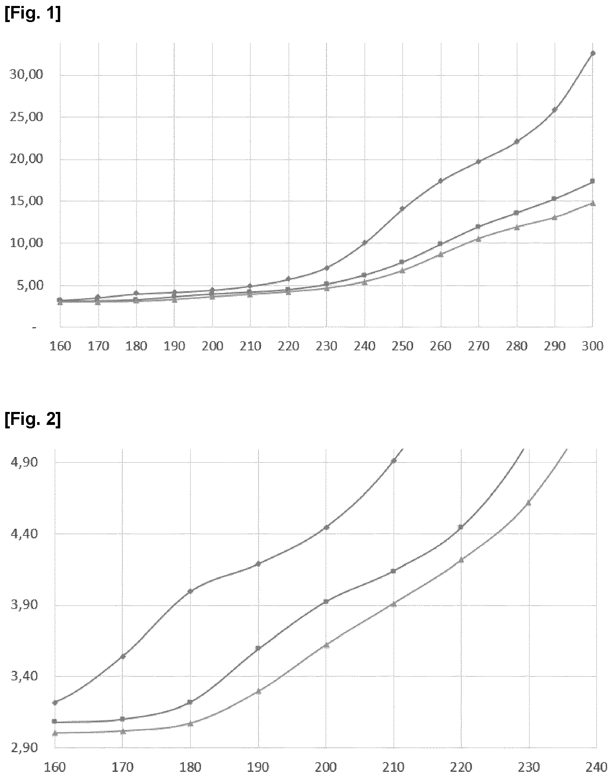

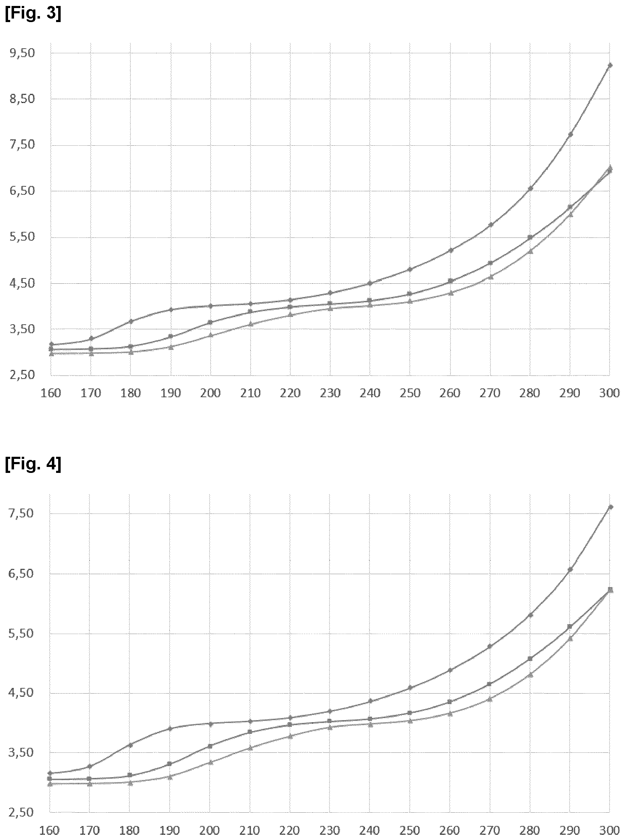

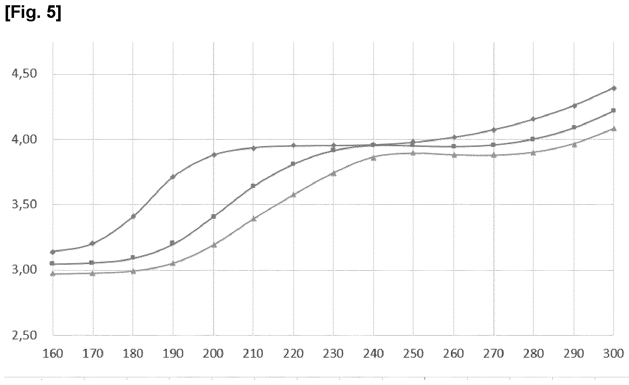

The measurement is based on the norm IEC 62631-2-1:2018. The apparatus used for the relative permittivity measurement is a dielectric spectrometer from Novocontrol, with an applied alternative tension of 1V. Electrodes used are in Titanium with a 40mm diameter. Frequency were tested at 1 Hz (Figure 1 and 2), 40 Hz (Figure 3), 63 Hz (Figure 4) and 1000 Hz (Figure 5) on a temperature range from 160°C to 300°C with 10°C steps. Three trials were done for each reference to get an average value of the dielectric constant.

Figures 1-6 clearly show that discs #1 and #2 have a lower relative permittivity than the comparative disc #3 on a very broad range of high temperatures, above 160°C.

Figures 1-6 also show that the relative permittivity of discs #1 and #2 is less sensitive to temperature than the relative permittivity of disc #3. This is in particular outstanding for the measurements made in a low frequency electric field (1 Hz).

This makes compositions #1 and #2 usable as electrical insulation material at a temperature of use of more than 160°C with remarkable insulating properties. As a result, a layer of electrical insulation made of compositions #1 and #2 may be used at a higher temperature than a layer of electrical insulation made of composition #3. Alternatively or in complement, a thinner layer of electrical insulation made of compositions #1 and #2 compared to a comparative electrical insulation made of composition #3, may be used to reach the same effect at a specified use temperature.

## Claims

1. Use of an insulating composition as an electrical insulation material at a temperature of more than 160°C,
wherein the insulating composition comprises at least one polyaryletherketone and at least one polyetherimide, the weight ratio of the polyaryletherketone to the polyetherimide being of 95:5 to 55:45.

2. Use according to claim 1, wherein the temperature is of 160°C to 170°C, or of 170°C to 180°C, or of 180°C to 200°C, or of 200°C to 220°C, or of 220°C to 250°, or of 250°C or over.

3. Use according to any one of claims 1 and 2, wherein the weight ratio of the polyaryletherketone to the polyetherimide in the insulating composition is of 85:15 to 60:40.

4. Use according to any one of claims 1 to 3, wherein the polyaryletherketone and the polyetherimide represent altogether at least 75%, or at least 80%, or at least 85%, or at least 90%, or at least 95% by weight of the total weight of the insulating composition.

5. Use according to any one of claims 1 to 4, wherein the insulating composition comprises at least one additional compound chosen among: other thermoplastic(s) than the polyaryletherketone and the polyetherimide(s), filler(s), additive(s), or their mixtures.

6. Use according to any one of claims 1 to 3, wherein the insulating composition consists of the polyaryletherketone and the polyetherimide.

7. Use according to any one of claims 1 to 6, wherein the polyaryletherketone is a polyetherketoneketone, which preferably essentially consists of, or consists of:
- a repeating unit of chemical formula: 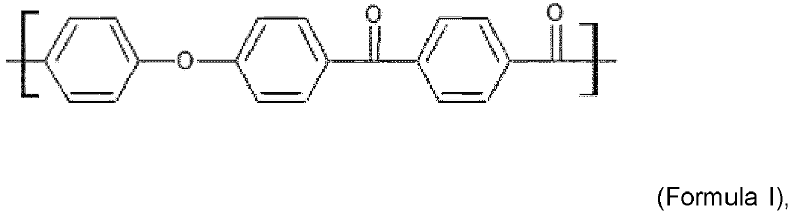 designated as terephthalic repeating unit (T) ; and optionally,
- a repeating unit of repeating units of chemical formula: 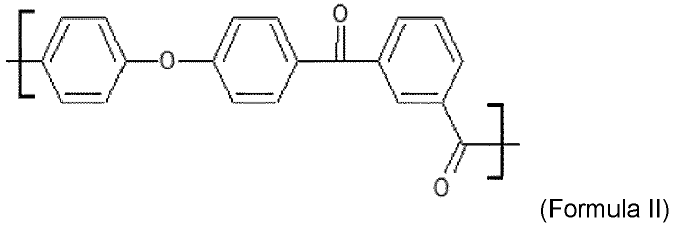 designated as isophthalic repeating unit (I).

8. Use according to claim 7, wherein the molar ratio of the terephthalic repeating units to the isophthalic repeating units is 50:50 to 100:0, preferably of 65:35 to 95:15, more preferably of 68:32 to 90:10, and most preferably of 71:29 to 85:15.

9. Use according to anyone of claims 1 to 8, wherein the polyetherimide comprises, essentially consists of, or consists of repeating units of formula: 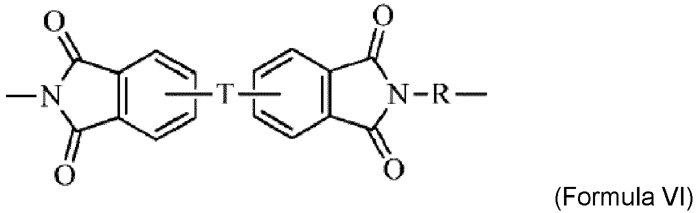 wherein R is a substituted or unsubstituted C₆₋₂₀ aromatic hydrocarbon group, a substituted or unsubstituted straight or branched chain C₄₋₂₀ alkylene group, a substituted or unsubstituted C₃₋₈, cycloalkylene group, T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic group optionally substituted with 1 to 6 C₁₋₈ alkyl groups, 1-8 halogen atoms, or a combination comprising at least one of the foregoing.

10. Use according to claim 9, wherein the polyetherimide comprises, or essentially consist of, or consist of repeating units of formula (III), wherein:
T represents the group of chemical formula: 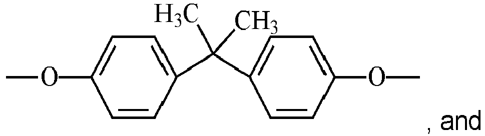
R represents the group of chemical formula:

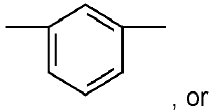

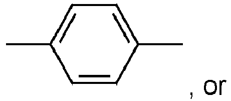

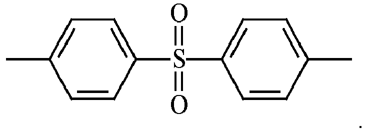

11. Use according to anyone of claims 1 to 10, wherein the insulating composition has a melt viscosity index from 1 to 100 cm³/10 min, preferably from 2 to 90 cm³/10 min, and most preferably from 5 to 85 cm³/10 min, at 380°C and under a charge of 5 kg.

12. Use of an insulating composition as an electrical insulation material according to anyone of claims 1 to 11, in an electric field having a frequency of 10 Hz or less.

13. Use of an insulating composition as an electrical insulation material according to anyone of claims 1 to 11, in an electric field having a frequency of 10 Hz to 100 Hz.

14. Use of an insulating composition as an electrical insulation material according to anyone of claims 1 to 11, in an electric field having a frequency of 100 Hz or more.

15. Use according to anyone of claims 1 to 14, wherein the lowest temperature at which the insulation composition's relative permittivity exceeds 4 is at least 10°C higher, preferably at least 15°C higher, more preferably at least 20°C higher, even more preferably at least 25°C higher, and most preferably at least 30°C higher than the corresponding temperature of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition.

16. Use according to anyone of claims 1 to 15, wherein the relative permittivity at a specified temperature of use of 190°C of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition, is at least 5,0%, preferably at least 9,0%, and most preferably at least 12,0% higher than the relative permittivity of the insulating composition.

17. Use according to anyone of claims 1 to 16, wherein the relative permittivity at a specified temperature of use of 250°C of a comparative composition comprising the same polyaryletherketone as in the insulating composition, said same polyaryletherketone replacing the mixture of polyaryletherketone and polyetherimide of the insulating composition, the weight amount of polyaryletherketone in the comparative composition being equal to the weight amount of polyaryletherketone and polyetherimide in the insulating composition, is at least 25,0%, preferably at least 50,0%, and most preferably at least 75,0% higher than the relative permittivity of the insulating composition, as measured in an electric field of 10 Hz or less.

18. Process comprising:
- providing an insulated conductor having at least one layer of electrical insulation, said electrical insulation comprising at least one polyaryletherketone and at least one polyetherimide, wherein the weight ratio of the polyaryletherketone to the polyetherimide is of 95:5 to 55:45 ;
- letting an electrical current going through the insulated conductor at a temperature of 160°C or more.
